# EUROPEAN PATENT APPLICATION

(11) **EP 3 608 172 A1**
(43) Date of publication of application: **12.02.2020**
(21) Application number: 18781527.9
(22) Date of filing: 22.03.2018
(51) Int. Cl.: B60Q 1/14, F21S 41/143, F21S 41/153, F21S 41/663, F21W 102/135, F21Y 115/10

(54) **VEHICLE LAMP FIXTURE**

(30) Priority: 04.04.2017 JP 2017074645
(71) Applicant: Koito Manufacturing Co., Ltd., Tokyo 108-8711 (JP)
(72) Inventor: OHNO, Tomoyuki, Shizuoka-shi Shizuoka 424-8764 (JP)
(74) Representative: Cabinet Beau de Loménie
(86) International application number: PCT/JP2018/011438
(87) International publication number: WO 2018/186187

(57) **Abstract**

A good light distribution pattern at both times of high beam lighting and low beam lighting is realized for a vehicle lamp that performs lighting switching of a high beam and a low beam by light emission and non-light emission of a lower side light emitting area in a light emitting unit in which a plurality of light emitting elements are arranged in a matrix.

The vehicle lamp according to the present invention includes a light emitting unit in which a plurality of light emitting elements are arranged in a matrix, a projection lens which is configured to focus and project light emitted from the light emitting unit, a light emission drive unit which is configured to drive the light emitting element to emit light based on an input voltage from an in-vehicle battery, and a control unit which is configured to perform control to cause both a lower side light emitting area and an upper side light emitting area located above the lower side light emitting area to emit light in response to a high beam lighting instruction and to cause the lower side light emitting area not to emit light in response to a low beam lighting instruction. The control unit is configured to perform control to vary light amount distribution of the upper side light emitting area at a time of high beam lighting and a time of low beam lighting.

## Description

### TECHNICAL FIELD

The present invention relates to a technical field of a vehicle lamp capable of switching lighting between a high beam and a low beam.

### BACKGROUND ART

For example, Patent Document 1 below discloses a vehicle lamp that focuses and projects light emitted by a plurality of light emitting elements with a lens. In the vehicle lamp, illuminance distribution in a light distribution pattern can be provided relatively easily by adjusting a light emission amount for each of the light emitting elements.

### CITATION LIST

### PATENT LITERATURE

[PTL 1] JP-A-2016-107743

### SUMMARY OF INVENTION

### TECHNICAL PROBLEM

Here, as the vehicle lamp, a configuration may be considered in which light emitted from a light emitting unit is projected through a projection lens using a light emitting unit in which a plurality of light emitting elements are arranged in a matrix. In addition, it is conceivable to realize lighting switching of a high beam and a low beam by causing a lower side light emitting area of the light emitting unit to emit light only at a time of high beam lighting and causing an upper side light emitting area of the light emitting unit to emit light at both times of the high beam lighting and low beam lighting.

When the light emitted from the light emitting unit is projected through the projection lens, an image on the light emitting surface and a projection image by the projection lens are inverted in a left-right direction and an upper-lower direction symmetrically with respect to an optical axis.

In the above-described vehicle lamp, when the lighting switching of the high beam and the low beam is to be realized only by light emission and non-light emission of the lower light emitting area, the light distribution pattern for either the low beam or the high beam may not be formed well. For example, when light amount distribution in the upper side light emitting area is set such that the light distribution pattern for the high beam is good, the light distribution pattern for the low beam may not be formed well only by causing the lower side light emitting area not to emit light. Conversely, when the light amount distribution in the upper side light emitting area is set such that the light distribution pattern for the low beam is good, the light distribution pattern for the high beam may not be formed well.

The present invention has been made in view of the above circumstances, and an object of the present invention is to realize a good light distribution pattern at both times of high beam lighting and low beam lighting for a vehicle lamp that performs lighting switching of a high beam and a low beam by light emission and non-light emission of a lower side light emitting area in a light emitting unit in which a plurality of light emitting elements are arranged in a matrix.

### SOLUTION TO PROBLEM

The vehicle lamp according to the present invention includes a light emitting unit in which a plurality of light emitting elements are arranged in a matrix, a projection lens which is configured to focus and project light emitted from the light emitting unit, a light emission drive unit which is configured to drive the light emitting element to emit light based on an input voltage from an in-vehicle battery, and a control unit which is configured to perform control to cause both a lower side light emitting area and an upper side light emitting area located above the lower side light emitting area to emit light in response to a high beam lighting instruction and to cause the lower side light emitting area not to emit light in response to a low beam lighting instruction. The control unit is configured to perform control to vary light amount distribution of the upper side light emitting area at a time of high beam lighting and a time of low beam lighting.

Accordingly, it is possible to switch to the light amount distribution suitable for forming the light distribution pattern for the high beam at the time of the high beam lighting and to the light amount distribution suitable for forming the light distribution pattern for the low beam at the time of the low beam lighting for the upper side light emitting area used at both the time of the high beam lighting and the time of the low beam lighting.

In the vehicle lamp according to the present invention, the control unit may be configured to vary the light amount distribution by varying drive current distribution of light emitting element groups in the upper side light emitting area.

Accordingly, it is not necessary to separately provide an optical component which is a liquid crystal element or the like for varying the light amount distribution.

In the vehicle lamp according to the present invention, the control unit may be configured to reduce a light emission amount at the time of the low beam lighting from that at the time of the high beam lighting in a specific light emitting area formed by a light emitting element group located on a right side among light emitting element groups that are located in the upper side light emitting area and are located at a boundary with the lower side light emitting area.

Accordingly, the rise of a left side line of the cut line at the time of the low beam lighting is reduced.

In the vehicle lamp according to the present invention, the control unit may be configured to increase the light emission amount at the time of the low beam lighting from that at the time of the high beam lighting in an upper light emitting area that is located in the upper side light emitting area and is located above the specific light emitting area.

Accordingly, it is possible to lower the illuminance center of the light distribution pattern.

In the vehicle lamp according to the present invention, the control unit may be configured to cause light emitting element groups located at a left end part and a right end part among light emitting element groups of the upper light emitting area not to emit light at the time of the high beam lighting and to emit light at the time of the low beam lighting.

Accordingly, it is possible to cope with the light distribution pattern for the high beam in which the light amount is concentrated at the upper, lower, left, and right central parts and the illuminance decreases gradually from the central parts toward the outer side and to prevent the light distribution pattern for the low beam from being a bad pattern in which the left end part and the right end part are dark.

### ADVANTAGEOUS EFFECTS OF INVENTION

According to the present invention, it is possible to realize a good light distribution pattern at both times of high beam lighting and low beam lighting for a vehicle lamp that performs lighting switching of a high beam and a low beam by light emission and non-light emission of a lower side light emitting area in a light emitting unit in which a plurality of light emitting elements are arranged in a matrix.

### BRIEF DESCRIPTION OF DRAWINGS

[Fig. 1] Fig. 1 is a circuit block diagram illustrating a schematic internal configuration of a vehicle lamp according to an embodiment;
[Fig. 2A] Fig. 2A is a diagram illustrating a configuration of a light emitting unit;
[Fig. 2B] Fig. 2B is a diagram illustrating a projection lens provided in the vehicle lamp according to an embodiment;
[Fig. 3A] Fig. 3A is a diagram illustrating an example of a light distribution pattern at a time of high beam lighting;
[Fig. 3B] Fig. 3B is a diagram illustrating an example of a light distribution pattern at a time of low beam lighting when light amount distribution in a lower light emitting area at the time of the low beam lighting is the same as that at the time of the high beam lighting;
[Fig. 4A] Fig. 4A is a diagram illustrating an example of the light amount distribution at the time of the high beam lighting in the embodiment;
[Fig. 4B] Fig. 4B is a diagram illustrating an example of the light amount distribution at the time of the high beam lighting in the embodiment;
[Fig. 5A] Fig. 5A is a diagram illustrating an example of the light amount distribution at the time of the low beam lighting in the embodiment;
[Fig. 5B] Fig. 5B is a diagram illustrating an example of the light amount distribution at the time of the low beam lighting in the embodiment; and
[Fig. 6] Fig. 6 is a diagram illustrating an example of a light distribution pattern at the time of the low beam lighting realized by the light amount distribution shown in Figs. 5A and 5B.

### DESCRIPTION OF EMBODIMENTS

Hereinafter, a vehicle lamp 1 as an embodiment of a vehicle lamp according to the present invention will be described with reference to the accompanying drawings.

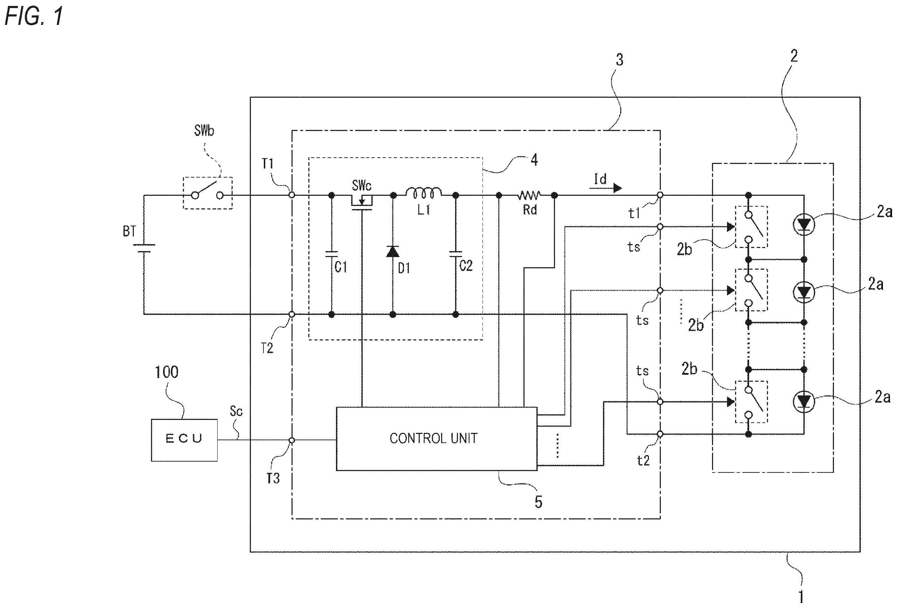

Fig. 1 is a circuit block diagram showing a schematic internal configuration of the vehicle lamp 1. Fig. 1 also shows an electronic control unit (ECU) 100, an in-vehicle battery BT, and an input switch SWb configured to turn on and turn off an input voltage from the in-vehicle battery BT to the vehicle lamp 1 which are provided outside the vehicle lamp 1 and provided in a vehicle.

The vehicle lamp 1 according to the present embodiment is a headlamp (a vehicle headlamp) in which a pair of left and right lamps are disposed at a front end part of the vehicle.

As shown in the drawing, the vehicle lamp 1 includes a light emitting unit 2 including a plurality of light emitting elements 2a, and a light emission drive circuit 3 which is configured to drive the light emitting elements 2a in the light emitting unit 2 to emit light based on the input voltage from the in-vehicle battery BT.

The light emitting unit 2 includes the plurality of light emitting elements 2a which are semiconductor light emitting elements that are a light emitting diode (LED) and the like, and a bypass switch 2b which is connected in parallel to each of the light emitting elements 2a. In the drawing, an example is shown in which all the light emitting elements 2a are connected in series in the light emitting unit 2. However, a series connection circuit formed by connecting a predetermined number of light emitting elements 2a in series may be connected in parallel.

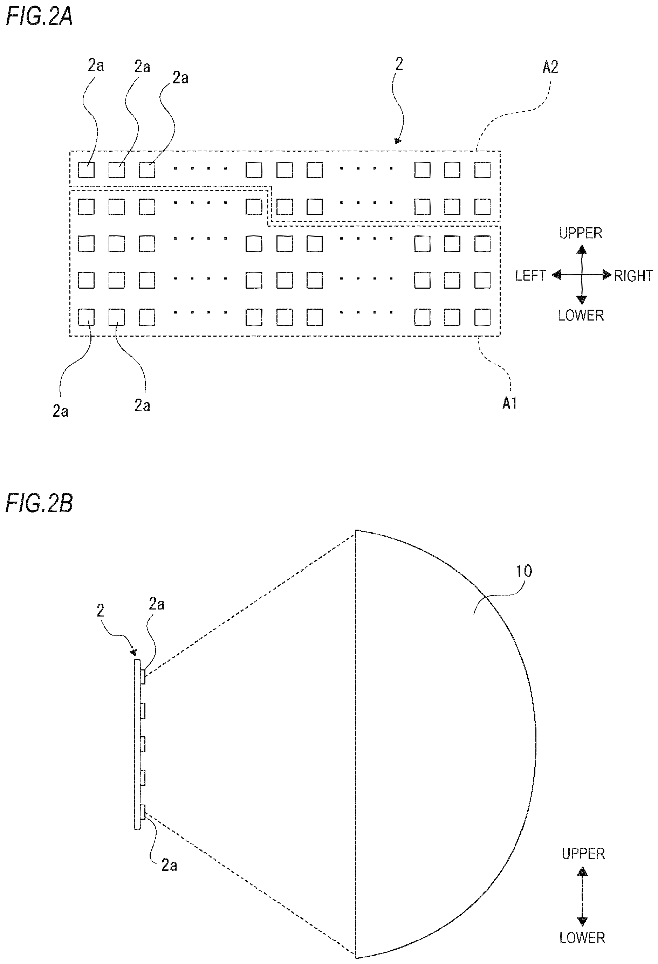

Here, a schematic external configuration of the light emitting unit 2 will be described with reference to Figs. 2A and 2B.

Fig. 2A is a front view of the light emitting unit 2. In Fig. 2A, an upper-lower direction and a left-right direction when the vehicle lamp 1 is attached to the vehicle are indicated by arrows.

In the light emitting unit 2, a plurality of light emitting elements 2a are arranged in a matrix, that is, the plurality of light emitting elements 2a are arranged in the upper and lower direction and the left and right direction. In the present embodiment, a light emitting element group, which corresponds to a stage of 40 light emitting elements 2a arranged in the left-right direction, is arranged in five stages in the upper-lower direction, so that a total of 200 light emitting elements 2a are provided.

The number of the light emitting elements 2 provided in the light emitting unit 2 is not limited to 200, and the number of light emitting elements 2a in each light emitting element group arranged in the left-right direction and the number of the stages are not limited to exemplified "40" and "5".

Fig. 2B is a side view of a projection lens 10 provided in the light emitting unit 2 and the vehicle lamp 1.

The projection lens 10 is disposed in front of the light emitting unit 2 and is configured to focus light emitted from the light emitting unit 2 and project the light toward front of the vehicle.

Here, an image (hereinafter, referred to as "light emitting image") on a light emitting surface of the light emitting unit 2 and a projection image by the projection lens 10 are inverted in the left-right direction and the upper-lower direction symmetrically with respect to a lens optical axis of the projection lens 10. Therefore, an upper side of the light emitting image corresponds to a lower side of the projection image (a light distribution pattern), and a lower side of the light emitting image corresponds to an upper side of the projection image.

In the vehicle lamp 1 according to the embodiment, lighting switching between the high beam and the low beam is performed by light emission control of the light emitting unit 2. Specifically, in the light emitting unit 2 in this case, a lower side light emitting area A1 and an upper side light emitting area A2 located above the lower side light emitting area A1 are defined as the light emitting area (see Fig. 2A). Both the lower side light emitting area A1 and the upper side light emitting area A2 emit light at the time of the high beam lighting, and the lower side light emitting area A1 does not emit light and the upper side light emitting area A2 emits light at the time of low beam lighting.

When a stage located at an uppermost part of the light emitting unit 2 is the first stage, the lower light emitting area A1 in the present embodiment is composed of all the light emitting elements 2a located in the third to fifth stages and all the light emitting elements 2a arranged on a left side of the 22th light emitting element 2a in the second stage from a left side.

The upper side light emitting area A2 is composed of the light emitting elements 2a other than the light emitting elements 2a forming the lower side light emitting area A1.

The description returns to Fig. 1.

The light emission drive circuit 3 includes a converter unit 4, a control unit 5, and a current detection resistor Rd.

An input voltage is supplied via the input switch SWb from the in-vehicle battery BT to the light emission drive circuit 3 between terminals T1, T2. The switch SWb is configured to supply the input voltage to the vehicle lamp 1 in response to an operation of turning on a headlight by a driver or the like in the vehicle.

The light emission drive circuit 3 is disposed in a lamp chamber of the vehicle lamp 1 together with the light emitting unit 2.

The converter unit 4 is configured to convert the input voltage (the battery voltage) applied between the terminals T1, T2 to generate an output voltage and to supply a drive current Id to the light emitting element 2a of the light emitting unit 2 based on the output voltage.

The converter unit 4 includes an inductor L1, a switch SW, a diode D1, and capacitors C1, C2, and is configured as a non-insulated step-down choke converter. As shown in the drawing, a converter switch SWc and an inductor L1 are connected in series on a positive electrode line between terminals T1, t1. The capacitor C1 is connected between the terminals T1, T2 (between the positive electrode line and a negative electrode line). An anode of the diode D1 is connected to the negative electrode line, and a cathode of the diode D1 is connected to a connection point of the converter switch SWc and the inductor L1. The capacitor C2 is connected between one end of the inductor L1 and the negative electrode line as an output smoothing capacitor.

The converter switch SWc is configured by a switching element which is a Metal-Oxide-Semiconductor Field-Effect Transistor (MOSFET) or the like. A switching control signal is supplied from the control unit 5 to a gate of the converter switch SWc.

With this configuration, the converter unit 4 performs DC-DC conversion. That is, the converter switch SWc is repeatedly turned on and turned off in response to the switching control signal, so that the output voltage obtained by stepping down the battery voltage is generated, and the drive current Id flows through the light emitting unit 2.

The current detection resistor Rd includes one end connected to a connection point of the inductor L1 and the capacitor C2 and the other end connected to an anode of the LED as the light emitting element 2a via the terminal t1. A voltage across the current detection resistor Rd is input to the control unit 5 so that the control unit 5 can detect the drive current Id from the voltage.

A cathode side of the LED in the light emitting unit 2 is connected to a terminal t2 of the light emission drive circuit 3. The terminal t2 is connected to the above-described negative electrode line.

The control unit 5 is configured to generate an error signal with respect to a target constant current value from the both-end voltage of the current detection resistor Rd and to control a switching operation of the converter switch SWc in the converter unit 4 based on the error signal such that a current value of the drive current Id coincides with the target value. Accordingly, constant current control of the drive current Id is performed. That is, the constant current control is performed by controlling on duty of the switching control signal such that the current value of the drive current Id coincides with the target value. Accordingly, the drive current Id having a predetermined current value based on the output voltage of the converter unit 4 flows through each of the light emitting elements 2 in the light emitting unit 2, so that the light emitting elements 2 emit light.

An instruction signal Sc is supplied from an ECU 100 to the control unit 5 via a terminal T3. The instruction signal Sc is configured to instruct the high beam lighting and the low beam lighting.

The control unit 5 is configured to perform on and off control of the bypass switch 2b in the light emitting unit 2 according to the instruction signal Sc. The on and off control is performed via a terminal ts provided corresponding to each bypass switch 2b in the light emission drive circuit 3.

When the instruction signal Sc instructs the high beam lighting, the control unit 5 controls the bypass switch 2b of the corresponding light emitting element 2a such that both the lower side light emitting area A1 and the upper side light emitting area A2 in the light emitting unit 2 emit light. When the instruction signal Sc instructs the low beam lighting, the control unit 5 controls the bypass switch 2b of the corresponding light emitting element 2a such that the lower side light emitting area A1 in the light emitting unit 2 does not emit light and the upper side light emitting area A2 in the light emitting unit 2 emits light.

Here, at the time of the high beam lighting, in order to form a good pattern as a high beam light distribution pattern, the control unit 5 controls the light emission amount of the light emitting element 2a such that predetermined light amount distribution is applied to both the lower side light emitting area A1 and the upper side light emitting area A2. The light emission amount control at this time is performed by adjusting an apparent light emission amount (a light emission amount per unit time) of the light emitting element 2a by the on and off control of the bypass switch 2b. When the bypass switch 2b is on, a current to flow through the light emitting element 2a is bypassed through the bypass switch 2b. Therefore, the light emitting element 2a is turned off. That is, when the bypass switch 2b is off, the drive current Id flows through the light emitting element 2a, and the light emitting element 2a is turned on. Therefore, the control unit 5 controls a drive current supply amount per unit time for the light emitting element 2a by adjusting the off duty of the bypass switch 2b and adjusts the apparent light emission amount.

The control unit 5 adjusts the off duty of the bypass switch 2b as described above for each light emitting element 2a to apply the predetermined light amount distribution to the lower side light emitting area A1 and the upper side light emitting area A2, respectively.

When the lighting switching of the high beam and the low beam is to be realized only by light emission and non-light emission of the lower light emitting area A1, the light distribution pattern for either the low beam or the high beam may not be formed well. For example, when light amount distribution in the upper side light emitting area A2 is set such that the light distribution pattern for the high beam is good as described above, the light distribution pattern for the low beam may not be formed well only by causing the lower side light emitting area A1 not to emit light.

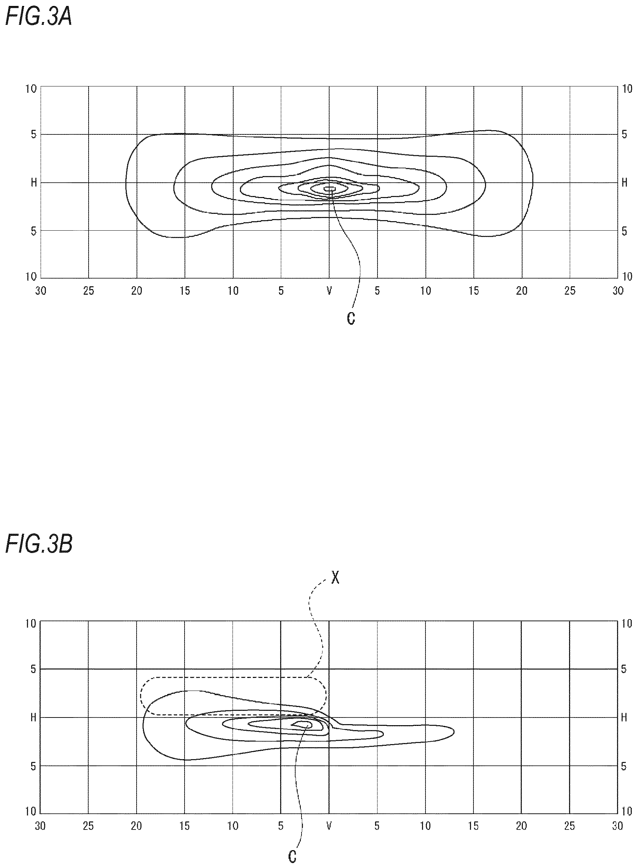

Fig. 3A is a diagram showing an example of a light distribution pattern at the time of high beam lighting in the vehicle lamp 1 and shows illuminance distribution in the light distribution pattern by contour lines.

In the high beam light distribution pattern, an illuminance center (a part having the highest illuminance) denoted by "C" in the drawing is at substantially the same height as that of a horizontal line (denoted by "H" in the drawing). Further, the illuminance distribution is given such that illuminance decreases continuously from the illuminance center to the outer side (such that there is no sudden decrease in illuminance in part).

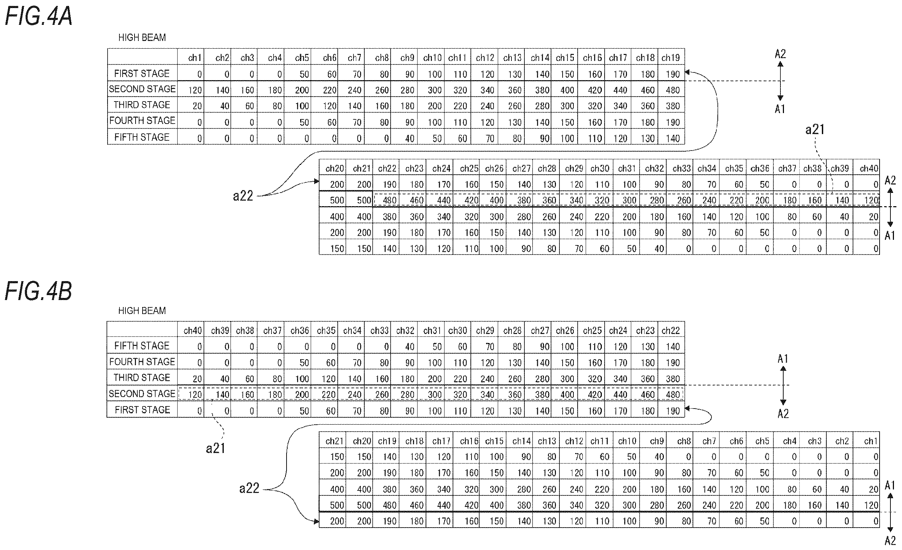

An example of the light amount distribution of the light emitting unit 2 set to realize the light distribution pattern at the time of the high beam lighting is shown in Figs. 4A and 4B.

In Fig. 4A, the drive current value (mA) of each light emitting element 2a in the light emitting unit 2 is represented by the above-described drive current value per unit time. Here, for the light emitting element group (40 elements in the present embodiment) located at each stage in the light emitting unit 2, ch (channel) numbers are assigned in ascending order from the light emitting element 2a located at the leftmost side in the front view of the light emitting unit 2 (ch 1 to ch 40).

Fig. 4B shows the light amount distribution (the drive current value distribution) shown in Fig. 4A with upper, lower, left, and right positions being inverted to facilitate comparison with the light distribution pattern.

In Figs. 4A and 4B, a boundary line of the lower side light emitting area A1 and the upper side light emitting area A2 is indicated by a bold line.

At the time of the high beam lighting, the light emission amount in a vicinity of a center of the light emitting unit 2 in the upper and lower direction and the left and right direction is increased, and the light emission amount is gradually decreased as the distance from the center increases. In particular, the light emitting element 2a does not emit light at both left end part and right end part of the lower end side (corresponding to the upper end side of the light distribution pattern) and the upper end side (corresponding to the lower end side of the light distribution pattern). Specifically, in the present embodiment, in the light emitting element group which is ch 1 to ch 8 of the fifth stage and ch 1 to ch 4 of the fourth stage located at a lower left end part of the light emitting unit 2 (corresponding to an upper right end part of the light distribution pattern), a light emitting element group which is ch 1 to ch 4 of the first stage located at an upper left end part of the light emitting unit 2 (corresponding to a lower right end part of the light distribution pattern), a light emitting element group which is ch 40 to ch 33 of the fifth stage and ch 40 to ch 37 of the fourth stage located at a lower right end part of the light emitting unit 2 (corresponding to an upper left end part of the light distribution pattern), and a light emitting element group which is ch 40 to ch 37 of the first stage located at the upper right end part of the light emitting unit 2 (corresponding to a lower left end part of the light distribution pattern), the light emitting element 2a does not emit light.

Fig. 3B shows an example of a light distribution pattern at the time of the low beam lighting, which is formed when the lower light emitting area A1 is caused not to emit light while the light amount distribution at the time of high beam lighting as described above is maintained.

In this light distribution pattern, spread of light upward from the horizontal line (H) is observed at an upper left end part of the pattern denoted by "X" in the drawing. A left side of a horizontal cut line at the time of the low beam lighting from a center is originally to be horizontal. However, the line is inclined upward to the left due to the spread of the light.

In this case, the illuminance center (C) is substantially the same as that of the horizontal line (H) which is substantially the same as that at the time of the high beam lighting (Fig. 3A).

The illuminance center in this case is biased to the left with respect to a vertical line (a center in the left-right direction) denoted by "V" in the drawing. This is because the upper side light emitting area A2 has a stepped shape that is downward to the right (corresponding to a stepped shape that is upward to the left in the light distribution pattern) so as to form a good horizontal cut line at the time of the low beam lighting, and because a light amount in the area (particularly, ch 22 to ch 28 and the like of the second stage) near the center of the light emitting unit 2 in a right downward area (ch 40 to ch 22 of the second stage) is set to be larger in consideration of the illuminance center of the light distribution pattern at the time of the high beam lighting.

Therefore, in the embodiment, the light amount distribution of the upper side light emitting area A2 at the time of the low beam lighting is different from that at the time of the high beam lighting.

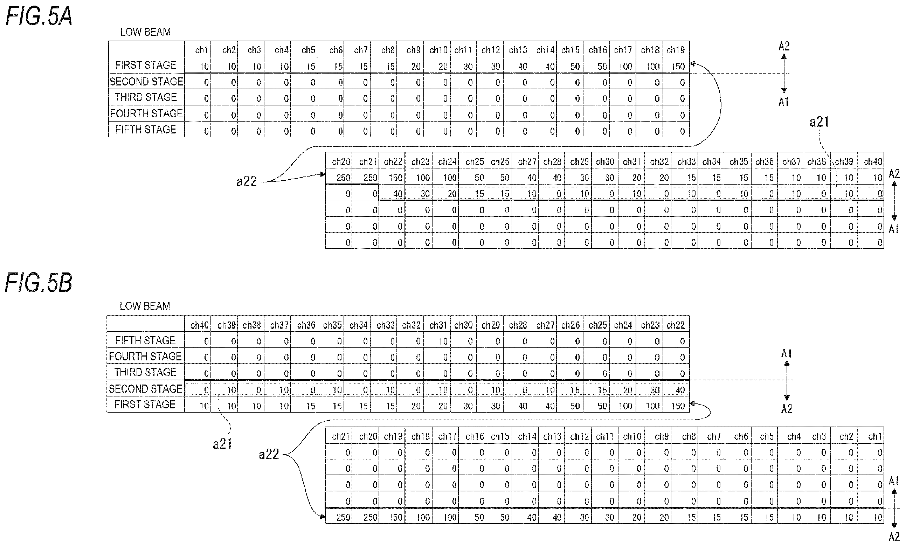

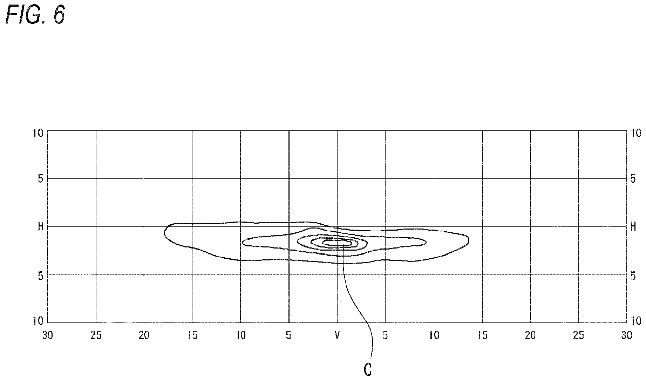

Figs. 5A and 5B are a diagram showing an example of the light amount distribution at the time of the low beam lighting in the embodiment. Fig. 6 is a diagram showing an example of a light distribution pattern at the time of the low beam lighting realized by the light amount distribution shown in Fig. 5. Fig. 5A shows the light amount distribution in the same manner as in Fig. 4A, and Fig. 5B shows the light amount distribution with upper, lower, left, and right positions being inverted in the same manner as in Fig. 4B.

Compared to Figs. 4A and 4B, in the light amount distribution in the upper side light emitting area A2 in this case, the peak of the light emission amount is lower than that at the time of the high beam lighting. In the present embodiment, the peak of a light emission amount at the time of the high beam lighting is 500 mA (ch 21 and ch 22 of the second stage), and the peak of a light emission amount at the time of the low beam lighting is 250 mA (ch 20 and ch 21 of the first stage).

In the light amount distribution in this case, in a specific light emitting area a21 formed by a light emitting element group located on the right side (corresponding to the left side in the light distribution pattern) among the light emitting element groups located at a boundary with the lower side light emitting area A1 in the upper side light emitting area A2, the light emission amount at the time of the low beam lighting is smaller than that at the time of the high beam lighting. In this case, the specific light emitting area a21 is composed of the light emitting elements 2a in ch 22 to ch 40 of the second stage.

In the present embodiment, in order to reduce the light emission amount of the specific light emitting area a21, the light emitting elements 2a that do not emit light (drive current value = 0) are mixed in the specific light emitting area a21 (ch 28, ch 30, ch 32, and the like of the second stage). That is, a desired light amount distribution is realized by a total of a non-light emitting part and a light emitting part other than the non-light emitting part. There is a limit to the minimum light emission amount (≠ 0) of the light emitting element 2a that can be realized by adjusting off duty of the bypass switch 2b. Therefore, it is possible to cope with this by mixing a part of the light emitting elements 2a that do not emit light as described above.

It is not essential to mix the light emitting elements 2a that do not emit light in the specific light emitting area a21.

As described above, the light emission amount in the specific light emitting area a21 at the time of the low beam lighting is reduced from that at the time of the high beam lighting, so that the spread of the light as denoted by "X" in Fig. 3B is prevented, and the rise of a left side line of the cut line is reduced (see Fig. 6). That is, it is possible to realize a good light distribution pattern for the low beam.

In the light amount distribution shown in Figs. 5A and 5B, the light emission amount of the upper light emitting area a22 (including all the light emitting elements 2a in the first stage in the present embodiment) located above the specific light emitting area a21 in the upper side light emitting area A1 is increased compared to that at the time of the high beam lighting.

Accordingly, it is possible to lower the illuminance center of the light distribution pattern. In Fig. 6, it can be confirmed that the illuminance center is located below that in Fig. 3B. That is, a position of the illuminance center is corrected to a position suitable for the low beam.

Here, in the present embodiment, a light emission amount of the upper light emitting area a22 is increased while the light emission amount of the specific light emitting area a21 is reduced at the time of the low beam lighting.

Accordingly, the illuminance center in the light distribution pattern is shifted not only downward but also rightward. Therefore, it is possible to eliminate a deviation of the illuminance center leftward generated in Fig. 3B, and it is possible to realize a good light distribution pattern in which the illuminance center decreases from the center gradually.

In the present embodiment, the light emitting element groups located at the left end part and the right end part among the light emitting element groups of the upper light emitting area a22 do not emit light at the time of the high beam lighting and emit light at the time of the low beam lighting. Specifically, in the present embodiment, the light emitting element group of ch 1 to ch 4 and the light emitting element group of ch 37 to ch 40 in the upper light emitting area a22 (that is, the first stage) are controlled not to emit light at the time of the high beam lighting and emit light at the time of the low beam lighting.

The light emitting element groups located at the left end part and the right end part are caused not to emit light at the time of the high beam lighting, so that it is possible to cope with the light distribution pattern for the high beam. Specifically, it contributes to the formation of a good light distribution pattern in which a decrease in illuminance from the illuminance center toward the outer side is continuous. Although it depends on imaging performance of the projection lens 10, it is possible to prevent unnecessary spread (blurring) of the light distribution pattern due to image distortion at the outer edge of the light distribution pattern.

On the other hand, the light emitting element groups at the left end part and the right end part are caused to emit light corresponding to the time of the low beam lighting, so that it is possible to prevent the light distribution pattern for the low beam from being a bad pattern in which the left end part and the right end part are dark.

As compared with the light distribution pattern at the time of low beam lighting shown in Fig. 6, the spread of the light distribution pattern at the time of the high beam lighting shown in Fig. 3A is larger, which is because the light emission amount at the central part of the light emitting unit 2 is considerably larger at the time of the high beam lighting than at the time of the low beam lighting.

In the present embodiment, the light emission amount from the central part to the left end part and the right end part is gradually reduced in the upper light emitting area a22.

Accordingly, a good light distribution pattern in which the illuminance continuously decreases from the central part toward the outer side can be realized as the light distribution pattern at the time of the low beam lighting.

Here, the control unit 5 stores values representing the off duty of the bypass switch 2b for realizing the drive current value for each of the light emitting elements 2a shown in Figs. 4 and 5 as a high beam duty value and a low beam duty value, respectively.

The control unit 5 performs the on and off control of each bypass switch 2b according to the high beam duty value when a high beam lighting instruction is issued by the above-described instruction signal Sc and performs the on and off control of each bypass switch 2b according to the low beam duty value when a low beam lighting instruction is issued.

In the vehicle lamp 1 according to the embodiment, the number of the stages of the light emitting elements 2a forming the lower side light emitting area A1 and the upper side light emitting area A2 and the number of the light emitting elements 2a arranged in each stage are not limited to the numbers exemplified above. The number of the stages of the light emitting elements 2a in the specific light emitting area a21 and the upper light emitting area a22 is not limited to one exemplified above and may be two or more. At this time, the number of the light emitting elements 2a arranged in each stage forming the specific light emitting area a21 is not limited to "19" exemplified above and may be two or more.

In the above, an example in which a step difference (a step difference between ch 21 and ch 22 in the present embodiment) is given in the upper side light emitting area A2. However, it is not essential to provide the step difference. If a step difference is not provided in the upper side light emitting area A2, when the light amount control of the specific light emitting area a21 and the upper light emitting area a22 described above is performed, the number of stages of the light emitting elements 2a in the upper side light emitting area A2 may be two or more, an area formed by a light emitting element group located on the right side of the light emitting element group located at the boundary with the lower side light emitting area A1 may be referred to as the specific light emitting area a21, and an area above the specific light emitting area a21 may be referred to as the upper light emitting area a22. At this time, the "light emitting element group located at the boundary" is not limited to the light emitting element group of one stage.

As described above, the vehicle lamp (1) according to the embodiment includes a light emitting unit (2) in which a plurality of light emitting elements (2a) are arranged in a matrix, a projection lens (10) which is configured to focus and project light emitted from the light emitting unit, a light emission drive unit (converter unit 4) which is configured to drive the light emitting element to emit light based on an input voltage from an in-vehicle battery, and a control unit (5) which is configured to perform control to cause both a lower side light emitting area (A1) and an upper side light emitting area (A2) located above the lower side light emitting area to emit light in response to a high beam lighting instruction and to cause the lower side light emitting area not to emit light in response to a low beam lighting instruction. The control unit performs control to vary light amount distribution of the upper side light emitting area at a time of high beam lighting and a time of low beam lighting.

Accordingly, it is possible to switch to the light amount distribution suitable for forming the light distribution pattern for the high beam at the time of the high beam lighting and to the light amount distribution suitable for forming the light distribution pattern for the low beam at the time of the low beam lighting for the upper side light emitting area used at both the time of the high beam lighting and the time of the low beam lighting.

Therefore, it is possible to realize a good light distribution pattern at both times of the high beam lighting and the low beam lighting for a vehicle lamp that performs lighting switching of the high beam and the low beam by light emission and non-light emission of the lower side light emitting area in the light emitting unit in which the plurality of light emitting elements are arranged in a matrix.

In the vehicle lamp according to the embodiment, the control unit varies the light amount distribution by varying drive current distribution of light emitting element groups in the upper side light emitting area.

Accordingly, it is not necessary to separately provide an optical component which is a liquid crystal element or the like for varying the light amount distribution.

Therefore, it is possible to reduce the number of components and reduce the cost.

In the vehicle lamp according to the embodiment, the control unit reduces a light emission amount at the time of the low beam lighting from that at the time of the high beam lighting in a specific light emitting area (21) formed by a light emitting element group located on a right side among light emitting element groups located at a boundary with the lower side light emitting area in the upper side light emitting area.

Accordingly, the rise of a left side line of the cut line at the time of the low beam lighting is reduced.

Therefore, it is possible to realize a good light distribution pattern for the low beam.

In the vehicle lamp according to the embodiment, the control unit increases the light emission amount at the time of the low beam lighting from that at the time of the high beam lighting in the upper light emitting area (a22) located above the specific light emitting area in the upper side light emitting area.

Accordingly, it is possible to lower the illuminance center of the light distribution pattern.

Therefore, it is possible to realize a good light distribution pattern for the low beam.

In the vehicle lamp according to the embodiment, the control unit causes a light emitting element group located at a left end part and a right end part among light emitting element groups of the upper light emitting area not to emit light at the time of the high beam lighting and to emit light at the time of the low beam lighting.

Accordingly, it is possible to cope with the light distribution pattern for the high beam in which the light amount is concentrated at the upper, lower, left, and right central parts and the illuminance decreases gradually from the central parts toward the outer side and to prevent the light distribution pattern for the low beam from being a bad pattern in which the left end part and the right end part are dark.

Therefore, it is possible to realize a good light distribution pattern at both the time of the high beam lighting and the time of the low beam lighting.

The description has been made on the assumption that the light amount distribution at the time of the high beam lighting and at the time of the low beam lighting is the same for a pair of left and right vehicle lamps 1. However, the light amount distribution may be varied between the left and right vehicle lamps 1.

The drive current values of the light emitting elements 2a shown in Figs. 4 and 5 are merely an example, and these drive current values may be determined appropriately according to the actual embodiment which is the number of light emitting elements 2a in the light emitting unit 2, the imaging performance of the projection lens 10, or the like.

The circuit configuration of the light emitting unit 2 and the circuit configuration of the light emitting drive circuit 3 are not limited to those exemplified above. For example, the configuration for adjusting the light emission amount for each light emitting element 2a is not limited to the configuration using the bypass switch 2b.

### REFERENCE SIGNS LIST

- 1: vehicle lamp
- 2: light emitting unit
- 2a: light emitting element
- 2b: bypass switch
- 3: light emission drive circuit
- 4: converter unit
- 5: control unit
- Sc: instruction signal
- 10: projection lens
- BT: in-vehicle battery
- SWb: input switch
- A1: lower side light emitting area
- A2: upper side light emitting area
- a21: specific light emitting area
- a22: upper light emitting area

## Claims

1. A vehicle lamp, comprising:
a light emitting unit in which a plurality of light emitting elements are arranged in a matrix;
a projection lens which is configured to focus and project light emitted from the light emitting unit;
a light emission drive unit which is configured to drive the light emitting element to emit light based on an input voltage from an in-vehicle battery; and
a control unit which is configured to perform control to cause both a lower side light emitting area and an upper side light emitting area located above the lower side light emitting area to emit light in response to a high beam lighting instruction and to cause the lower side light emitting area not to emit light in response to a low beam lighting instruction,
wherein the control unit is configured to perform control to vary light amount distribution of the upper side light emitting area at a time of high beam lighting and a time of low beam lighting.

2. The vehicle lamp according to claim 1,
wherein the control unit is configured to vary the light amount distribution by varying drive current distribution of light emitting element groups in the upper side light emitting area.

3. The vehicle lamp according to claim 1 or 2,
wherein the control unit is configured to reduce a light emission amount at the time of the low beam lighting from that at the time of the high beam lighting in a specific light emitting area formed by a light emitting element group located on a right side among light emitting element groups that are located in the upper side light emitting area and are located at a boundary with the lower side light emitting area.

4. The vehicle lamp according to claim 3,
wherein the control unit is configured to increase the light emission amount at the time of the low beam lighting from that at the time of the high beam lighting in an upper light emitting area that is located in the upper side light emitting area and is located above the specific light emitting area.

5. The vehicle lamp according to claim 4,
wherein the control unit causes light emitting element groups located at a left end part and a right end part among light emitting element groups of the upper light emitting area not to emit light at the time of the high beam lighting and to emit light at the time of the low beam lighting.
